# EUROPÄISCHE PATENTANMELDUNG

(11) **EP 0 789 424 A2**
(43) Veröffentlichungstag der Anmeldung: **13.08.1997**
(21) Anmeldenummer: 97810044.4
(22) Anmeldetag: 29.01.1997
(51) Int. Cl.: H01R 13/53

(54) **Verbindungselement für zwei Abschnitte eines hochspannungsführenden Stromleiters**

(30) Priorität: 08.02.1996 DE 19604486
(71) Anmelder: ASEA BROWN BOVERI AG, 5400 Baden (CH)
(72) Erfinder: Moritz, Bertil, 72348 Västeras (SE); Pettersson, Kjell, 8152 Glattbrugg (CH)
(74) Vertreter: Kaiser, Helmut, Dr.

(57) **Zusammenfassung**

Das Verbindungselement (1) stellt eine mechanische und elektrische Verbindung her zwischen zwei Abschnitten (6, 7) eines in einem isoliergasgefüllten Druckrohr (3) auf Stützisolatoren (2) gehaltenen, hochspannungsführenden Stromleiters (4) einer gasisolierten Leitung (1). Das Verbindungselement (5) enthält in das Ende eines ersten (6) beider Stromleiterabschnitte (6, 7) eingeformte, in Umfangsrichtung gleichmässig verteilte und axial geführte Nuten (10) und in die Nuten (10) eingeführte, federnd ausgebildete Kontaktelemente (13). Das Verbindungselement (5) enthält ferner ein mit dem zweiten Stromleiterabschnitt (7) elektrisch leitend verbundenes und der Führung des Leiterstroms dienendes Abschirmrohr (14), welches unter Bildung von Kontaktkraft in axialer Richtung über die Kontaktelemente (13) geschoben ist.

## Beschreibung

### TECHNISCHES GEBIET

Bei der Erfindung wird ausgegangen von einem Verbindungselement für zwei Abschnitte eines in einem isoliergasgefüllten Druckrohr auf Stützisolatoren gehaltenen, hochspannungsführenden und im wesentlichen drehsymmetrisch ausgebildeten Stromleiters einer gasisolierten Leitung.

### STAND DER TECHNIK

Ein Verbindungselement der eingangs genannten Art ist beispielsweise in einem Aufsatz von A.Eidinger: Aufbau, Einsatz und Erprobung von SF₆-Rohrgaskabeln, Brown Boveri Mitt. 61 1976 (11) 688-694, beschrieben. Bei einer aus diesem Stand der Technik bekannten metallgekapselten elektrischen Hochspannungsleitung ist ein in der isoliergasgefüllten Metallkapselung zentrisch gehaltener Stromleiter auf Isolierbeinen abgestützt. Das axiale Wärmedehnungsspiel des Stromleiters wird durch Kompensatoren aufgenommen, welche die volle Stromtragfähigkeit aufweisen. Vor Ort werden dann die Stromleiter einzelner Transporteinheiten der Leitung zusammengeschweisst.

### KURZE DARSTELLUNG DER ERFINDUNG

Der Erfindung, wie sie in Patentanspruch 1 angegeben ist, liegt die Aufgabe zugrunde, ein Verbindungselement der eingangs genannten Art zu schaffen, welches die Montage und Wartung der gasisolierten Leitung erleichtert und welches zugleich eine sichere Kontaktgabe bei geringer dielektrischer Belastung der gasisolierten Leitung ermöglicht.

Das Verbindungselement nach der Erfindung zeichnet sich dadurch aus, dass der Stromleiter vor Ort durch Zusammenstecken aufeinanderfolgender Stromleiterabschnitte unter Verwendung von federnden Kontaktelementen und leiterstromführenden Abschirmrohren in einfacher und wirtschaftlicher Weise montiert werden kann. Schweissarbeiten und damit verbundene Verschmutzungsrisiken entfallen vollständig. Durch geeignete Ausbildung der Abschirmrohre wird die Verbindungsstelle zwischen zwei aufeinanderfolgenden Stromleiterabschnitten zugleich dielektrisch abgeschirmt, so dass unerwünschte Erhöhungen der elektrischen Feldstärke im Gasraum zwischen Stromleiter und Druckrohr mit Sicherheit vermieden werden. Im Verbindungselement nach der Erfindung zur Aufnahme der federnden Kontaktelemente vorgesehene, axial ausgerichtete Nuten können zugleich zur Halterung der Stützisolatoren der gasisolierte Leitung verwendet werden.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine Aufsicht auf einen axial geführten Schnitt durch eine gasisolierte Leitung mit einem Verbindungselement nach der Erfindung,
- Fig.2: eine Aufsicht in Pfeilrichtung auf einen längs II-II geführten Schnitt durch die gasisolierte Leitung nach Fig.1,
- Fig.3: eine Aufsicht auf einen axial geführten Schnitt durch das Verbindungselement gemäss Fig.1,
- Fig.4: eine Aufsicht in Pfeilrichtung auf einen längs IV-IV geführten Schnitt durch das Verbindungselement gemäss Fig.3, und
- Fig.5: eine Seitenansicht eines im Verbindungselement gemäss Fig.3 verwendeten Kontaktelementes.

### WEG ZUR AUSFÜHRUNG DER ERFINDUNG

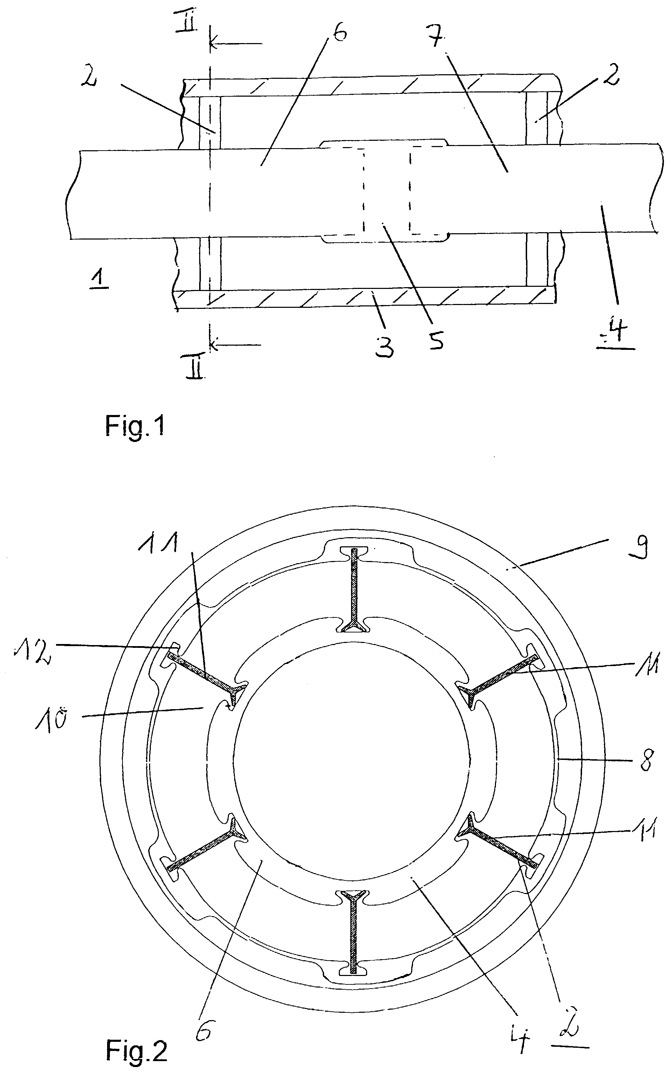

In allen Figuren beziehen sich gleiche Bezugszeichen auf gleichwirkende Teile. Eine in Fig.1 dargestellte und mit dem Bezugszeichen 1 gekennzeichnete gasisolierte Leitung weist einen auf Stützisolatoren 2 in einem Druckrohr 3 zentral gelagerten, axialsymmetrisch und vorzugsweise hohl ausgebildeten Stromleiter 4 auf. Das Druckrohr 3 ist mit einem Isoliergas, wie etwa SF₆, mit bis zu einigen bar Druck gefüllt und kann aus Metall, wie etwa Aluminium oder Stahl, aus gegebenenfalls leitfähig beschichtetem Isolierstoff, oder aus einem rohrförmigen, metallenen Aussenleiter und einem umgebenden, druckfesten Isolierrohr bestehen, wobei als Material für den Isolierstoff vorzugsweise ein gegebenenfalls füllstoffverstärktes-insbesondere faserverstärktes - Duromer, etwa ein Thermoplast, wie insbesondere ein Polyäthylen, oder ein Duromer, wie insbesondere ein Epoxid, verwendet wird. Das Bezugszeichen 5 bezieht sich auf ein Verbindungselement, welches der mechanischen und elektrischen Kopplung zweier im Stromleiter 4 aufeinanderfolgender Leiterabschnitte 6, 7 dient.

Aus Fig.2 ist ersichtlich, dass bei einer Ausführungsform des Druckrohrs 3 mit einem rohrförmigen Aussenleiter 8 und einem den Aussenleiter konzentrisch umgebenden druckfesten Isolierrohr 9 auf der Mantelfläche des Stromleiters 4 sechs in Umfangsrichtung gleichmässig verteilte, axial ausgerichtete Nuten 10 vorgesehen sind, welche jeweils der Aufnahme eines Fusses eines radial erstreckten, etwa aus Polyäthylen bestehenden, Isolierteils 11 dienen. Das vom Fuss abgewandte äusseres Ende jedes der Isolierteile 11 ist jeweils in einer von sechs in die Innenfläche des rohrförmigen Aussenleiters 8 eingebrachten und axial ausgerichteten Nuten 12 gelagert. Die in den Nuten 10 gelagerten Isolierteile 11 bilden den Stützisolator 2.

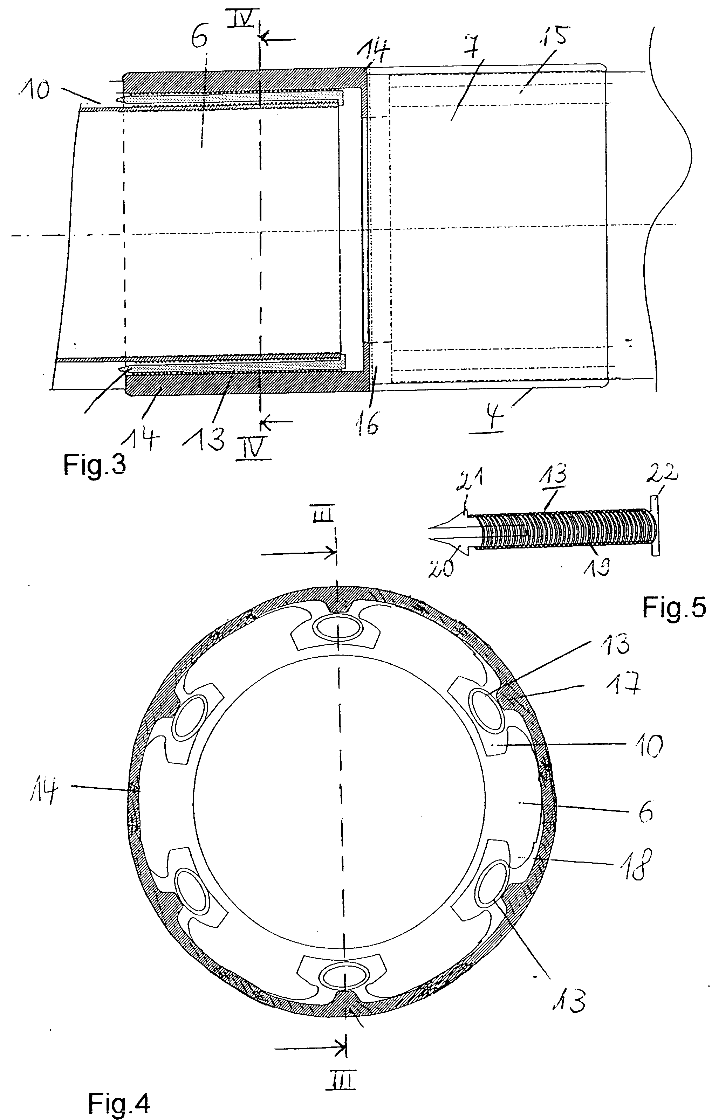

Aus Fig.3 ist ersichtlich, dass die Nuten 10 bis an das Ende des Abschnitts 6 des Stromleiters 4 geführt sind und im Endbereich dieses Abschnitts jeweils auch der Aufnahme eines Kontaktelementes 13 dienen. Über die Kontaktelemente 13 ist ein mit dem zweiten Stromleiterabschnitt elektrisch leitend verbundenes und der Führung des Leiterstroms dienendes Abschirmrohr 14 in axialer Richtung unter Bildung einer in radialer Richtung wirkenden Kontaktkraft geschoben. Ein für manche Anwendungen ausreichend guter Stromübergang vom Stromleiterabschnitt 6 über die Kontaktelemente 13 zum Abschirmrohr 14 wird erreicht, wenn lediglich drei oder vier Kontaktelemente 13 vorgesehen sind. Beträgt die Anzahl an Kontaktelementen mehr als zwanzig, so lässt sich im allgemeinen keine wesentliche Steigerung des übertragenen Stroms mehr erreichen.

Wie Fig.3 entnommen werden kann, sind auch in dem dem Leiterabschnitt 6 zugewandten Ende des Stromleiterabschnitts 7 entsprechend den Nuten 10 ausgebildete und angeordnete Nuten 15 eingeformt. Auch diese Nuten dienen jeweils der Aufnahme mindestens eines federnd ausgebildeten Kontaktelementes, welches entsprechend dem Kontaktelement 13 ausgebildet sein kann. Aus Gründen der Übersichtlichkeit sind die in den Nuten 15 vorgesehenen Kontaktelemente in Fig.3 nicht dargestellt. Das Abschirmrohr 14 ist in axialer Richtung unter Bildung einer radialen Kontaktkraft über diese Kontaktelemente geschoben. Das Abschirmrohr 14 weist einen in seiner Mitte in Umfangsrichtung geführten und zwischen den Enden der beiden Leiterabschnitte 6, 7 angeordneten ringförmigen Anschlag 16 auf. Durch diesen Anschlag 16 wird erreicht, dass sich das Abschirmrohr 14 stets an der Verbindungsstelle befindet und zum einen den Leiterstrom vom Abschnitt 6 über die Kontaktelemente 13 zu den Kontaktelementen des Stromleiterabschnitts 7 führt und zum anderen die Enden der Abschnitte 6 und 7 und die Kontaktelemente abschirmt. Zwischen einem stirnseitigem Ende eines der beiden Abschnitte 6, 7 bzw. gegebenenfalls auch zwischen beiden stirnseitigen Enden der Abschnitte 6, 7 ist Spiel vorhanden, welches ausreicht, dass eine durch thermische Ausdehnung des Stromleiters 4 bedingte axiale Verschiebung der Abschnitte kompensiert werden kann. Die Kontaktelemente wirken bei einer solchen Verschiebung als Gleitkontakte.

Wie aus Fig.4 ersichtlich ist sind in die Innenfläche des das Ende des Stromleiterabschnitts 6 übergreifenden Teils des Abschirmrohrs 14 sechs axial ausgerichtete Nocken 17 eingeformt. Diese Nocken 17 sind jeweils in eine der das Kontaktelement 13 aufnehmenden Nuten 10 eingeführt und unter Bildung von Kontaktkraft auf den Kontaktelementen 13 abgestützt. Jede der Nuten 10 weist eine Hinterschneidung 18 auf. Diese Hinterschneidung 18 fixiert das Kontaktelement 13 in radialer Richtung.

Aus Fig.5 ist eine bevorzugte Ausführungsform eines Kontaktelementes 13 entnehmbar. Ersichtlich enthält ein solches Kontaktelement eine Schraubenfeder 19 aus elektrischem Kontaktmaterial sowie ein Arretierelement 20. Das Arretierelement 20 weist eine durch Spreizwirkung in einer nicht dargestellten Hinterschneidung der Nut 10 mittels Widerhaken 21 festsetzbare Feder aus Federstahl oder federndem Kunststoff auf.

Bei der Montage des Stromleiters 4 werden zunächst jeweils einer von sechs Isolierteilen 11 des Stützisolators 2 und jeweils eines von sechs Kontaktelemente 13 in jeweils eine der sechs Nuten 10 eingesteckt, wobei das Arretierelement 20 mittels der Widerhaken 21 in der Nut 10 festgesetzt wird. Ein in das Arretierelement 20 eingeformter Haltesteg 22 fixiert die Schraubenfeder 19 in axialer Richtung. Danach wird ein offenes Ende des Abschirmrohrs 14 auf das die Kontaktelemente 13 tragende Ende des Stromleiterabschnitts 6 unter Bildung der Kontaktkraft geschoben. In entsprechender Weise werden in die Nuten 15 des gegenüberstehenden Endes des Abschnitts 7 die Isolierteile des Stützisolators und die Kontaktelemente eingesteckt. Durch Einschieben des so vorbereiteten Endes des Abschnitts 7 in das andere offene Ende des Abschirmrohrs 14 wird unter Bildung von Kontaktkraft das Verbindungselement 5 fertiggestellt.

### Bezugszeichenliste

- 1: gasisolierte Leitung
- 2: Stützisolator
- 3: Druckrohr
- 4: Stromleiter
- 5: Verbindungselement
- 6, 7: Stromleiterabschnitte
- 8: Aussenleiter
- 9: Isolierrohr
- 10: Nuten
- 11: Isolierteile
- 12: Nuten
- 13: Kontaktelemente
- 14: Abschirmrohr
- 15: Nuten
- 16: Anschlag
- 17: Nocken
- 18: Hinterschneidung
- 19: Schraubenfeder
- 20: Arretierelement
- 21: Widerhaken
- 22: Haltesteg

## Patentansprüche

1. Verbindungselement (5) für zwei Abschnitte (6, 7) eines in einem isoliergasgefüllten Druckrohr (3) auf Stützisolatoren (2) gehaltenen, hochspannungsführenden und im wesentlichen axialsymmetrisch ausgebildeten Stromleiters (4) einer gasisolierten Leitung (1), dadurch gekennzeichnet, dass in das Ende eines ersten (6) beider Stromleiterabschnitte (6, 7) in Umfangsrichtung gleichmässig verteilte und axial geführte erste Nuten (10) eingeformt sind, von denen mindestens eine der Aufnahme eines federnd ausgebildeten ersten Kontaktelementes (13) dient, und dass ein mit dem zweiten Stromleiterabschnitt (7) elektrisch leitend verbundenes und der Führung des Leiterstroms dienendes Abschirmrohr (14) vorgesehen ist, welches in axialer Richtung unter Bildung von Kontaktkraft über das erste Kontaktelement (13) geschoben ist.

2. Verbindungselement nach Anspruch 1, dadurch gekennzeichnet, dass in der Innenfläche des das Ende des ersten Stromleiterabschnitts (6) übergreifenden Teils des Abschirmrohrs (14) axial ausgerichtete Nocken (17) eingeformt sind, von denen mindestens eine in die das erste Kontaktelement (13) aufnehmende Nut (10) eingeführt und unter Bildung der radialen Kraft auf dem in dieser Nut (10) vorgesehenen Kontaktelement (13) abgestützt ist.

3. Verbindungselement nach einem der Ansprüche 1 oder 2, dadurch gekennzeichnet, dass das erste Kontaktelement (13) als Schraubenfeder (19) ausgebildet ist.

4. Verbindungselement nach Anspruch 3, dadurch gekennzeichnet, dass die Schraubenfeder (19) in axialer Richtung von einem in der zugeordneten Nut (10) fixierbaren Arretierelement (20) gehalten ist.

5. Verbindungselement nach Anspruch 4, dadurch gekennzeichnet, dass das Arretierelement (20) als durch Spreizwirkung in der Nut (10) festsetzbare Feder ausgebildet ist.

6. Verbindungselement nach Anspruch 5, dadurch gekennzeichnet, dass die Feder Widerhaken (21) aufweist, welche das Arretierelement (20) und damit auch die Schraubenfeder in der Nut (10) in radialer Richtung festsetzen.

7. Verbindungselement nach einem der Ansprüche 1 bis 6; dadurch gekennzeichnet, dass mindestens drei und höchstens zwanzig jeweils mindestens ein erstes Kontaktelement (13) aufnehmende erste Nuten (10) vorgesehen sind.

8. Verbindungselement nach einem der Ansprüche 1 bis 7, dadurch gekennzeichnet, dass in das Ende des zweiten (7) beider Stromleiterabschnitte (6, 7) entsprechend dem Ende des ersten Stromleiterabschnitts (6) ausgebildete und angeordnete zweite Nuten (15) eingeformt sind, von denen mindestens eine der Aufnahme mindestens eines federnd ausgebildeten zweiten Kontaktelementes dient, und dass das Abschirmrohr (14) in axialer Richtung unter Bildung von Kontaktkraft über das zweite Kontaktelement geschoben ist.

9. Verbindungselement nach Anspruch 8, dadurch gekennzeichnet, dass das Abschirmrohr (14) in der Mitte einen im Umfangsrichtung geführten und zwischen den Enden der beiden Leiterabschnitte (6, 7) angeordneten Anschlag (16) aufweist.

10. Verbindungselement nach einem der Ansprüche 1 bis 9, dadurch gekennzeichnet, dass die das erste Kontaktelement (13) aufnehmende Nut (10) zugleich ein Isolierteil (11) eines der Stützisolatoren (2) trägt.

11. Verfahren zur Herstellung des Verbindungselements nach Anspruch 1, dadurch gekennzeichnet, dass das erste Kontaktelement (13) in die mindestens eine erste Nut (10) eingesteckt wird, und dass danach ein erstes Ende des Abschirmrohrs (14) auf das das Kontaktelement (13) tragende Ende des ersten Stromleiterabschnitts (6) unter Bildung der Kontaktkraft geschoben wird.

12. Verfahren nach Anspruch 11, dadurch gekennzeichnet, dass in eine axial geführte zweite Nut (15) eines Endes des zweiten (7) beider Abschnitte (6, 7) des Stromleiters (4) ein zweites Kontaktelement eingesteckt wird, und dass danach das zweite Ende des Abschirmrohrs (14) auf das das zweite Kontaktelement tragende Ende des zweiten Stromleiterabschnitts (7) unter Bildung von Kontaktkraft geschoben wird.
